# EUROPEAN PATENT APPLICATION

(11) **EP 4 554 019 A1**
(43) Date of publication of application: **14.05.2025**
(21) Application number: 23209494.6
(22) Date of filing: 13.11.2023
(51) Int. Cl.: H01S 3/00, H01S 3/23

(54) **ULTRASHORT PULSE AMPLIFICATION METHOD AND DEVICE**

(71) Applicant: Valstybinis Moksliniu Tyrimu Institutas Fiziniu Ir Technologijos Mokslu Centras, 02300 Vilnius (LT)
(72) Inventor: REGELSKIS, Kestutis, 02300 Vilnius (LT); GAVRILINAS, Nikolajus, 02300 Vilnius (LT); RUSTEIKA, Nerijus, 02300 Vilnius (LT)
(74) Representative: Draugeliene, Virgina Adolfina

(57) **Abstract**

The invention relates to the field of laser technology and is intended for methods and devices for amplifying ultra-short pulses, when the ultra-short input pulses 2 generated by the laser (1) are directed to the pulse stretcher (4) for stretching, the temporally stretched pulses (2') are separated by a circulator (3) from the input pulses (2) and are directed to the amplifier (5) for amplification, the amplified temporally stretched pulses (2") are directed to the pulse compressor (7) and compressed, finally the compressed pulses (2‴) are separated from the amplified temporally stretched pulses (2") and output to free space. The pulse stretcher (4) and the pulse compressor (7) consist of identical dispersion chirped volume Bragg gratings (CVBGs) (8) oriented in 180 degrees with respect to each other, which are adjacently cut in pairs from the same bulky CVBG, the dispersion of at least one of the CTBs (8) is temperature controlled by creating a temperature gradient along the CVBGs (8) to compensate for the dispersion of the amplifier (5) and, if necessary, to compensate for the chirp of the ultra-short input pulses (2) generated by the laser (1). In the pulse stretcher 4 and/or pulse compressor (7), the CVBG 8 is embedded in a heat-conducting tube (9) of matched shape and dimensions, with a thermal conductivity many times greater than the thermal conductivity of the CVBG (8), and with an air gap of a few to tens of micrometers between the inner wall of the heat-conducting tube (9) and the surface of the CVBG 8, this prevents the CVBG (8) from mechanical stress and at the same time ensures excellent thermal contact between the CVBG (8) and the heat-conducting tube (9), thus creating an uniform longitudinal temperature gradient and consequently uniform dispersion over the whole aperture of the CVBG (8).

## Description

### Technical field to which the invention relates

The invention relates to the field of the laser technology, particularly to methods and devices for amplifying ultra-short pulses, where ultra-short input pulses are temporally stretched before amplification, then amplified, and then compressed again after amplification.

### Relevant prior art

The amplification of ultra-short pulses is complicated because the peak power of the amplified pulses often exceeds the optical damage threshold of the amplifier, and a number of non-linear optical phenomena occur at high peak power, which can distort the amplified ultra-short pulses or damage the amplifier. To circumvent this limitation, the so-called chirped pulse amplification is used in ultra-short pulse laser systems, where before amplification, the ultra-short input pulses are temporally stretched (chirped), thus reducing the peak power of the pulses and protecting the amplifier from damage, and after amplification, the stretched pulses are compressed, and thus ultra-short pulses of extremely high peak power are generated. A pulse is called chirped if its carrier frequency varies in time, if the frequency varies linearly then the pulse is linearly chirped, temporally stretched pulses are chirped. For the temporal stretching of ultra-short pulses in fiber lasers, pulse stretchers consisting of chirped fiber Bragg gratings are commonly used, the dispersion of which is pre-matched to the dispersion of the pulse compressor and the amplifier at the time of manufacture, meanwhile the pulse compressor is usually composed of bulky diffraction gratings, prisms, or chirped volume Bragg gratings (CVBG), sometimes hollow core photonic crystal fibers are also used for pulse compression, however chirped fiber Bragg gratings are not appropriate for pulse compression due to the high peak powers and energies of the compressed pulses. In some cases, pulse stretchers with temperature- or strain-tuned chirped fiber Bragg gratings are used to match the dispersions of the pulse stretcher, the pulse compressor, the amplifier, and to compensate for the initial pulse chirp and to control the duration of the compressed pulse. The main disadvantage of these solutions is that different dispersive components are used for pulse stretching and compression, and often these dispersive components are supplied by different manufacturers.

There is known a method and device for pulse amplification in which the pulse stretcher and compressor consists of chirped Bragg gratings formed in an optical fiber or waveguide. Alternatively, the same chirped Bragg grating can be used to stretch and compress the pulses by reflecting pulses from opposite sides of the chirped Bragg grating. A pulse compressor consisting of a chirped Bragg grating is extremely compact and efficient compared to a compressor made of conventional bulky diffraction gratings. A known method and device is described in the United States patent US5499134 (A), 1996.

The disadvantage of the known method and device is that the pulse compressor is a chirped Bragg grating formed in an optical fiber or waveguide, which normally has a very small cross-sectional area, and therefore the pulse compressor is not suitable for high pulse peak power. In addition, no means are provided to compensate for the initial pulse chirp and amplifier dispersion.

There is known a method and device for amplifying light pulses, comprising a pulse stretcher, an amplifier and a pulse compressor which compresses the stretched and amplified pulses, the pulse stretcher and the compressor are dispersive elements with inversely identical dispersions. The dispersion mismatch between the pulse stretcher, pulse compressor, amplifier and other additional elements is compensated by an additional tunable dispersion element. A known method and device is described in United States patent US8659821 (B2), 2014.

A disadvantage of the known method and device is that an additional tunable dispersion element is required to compensate for the dispersion mismatch between the pulse stretcher, compressor, amplifier and other additional elements, which makes the system more complex and expensive. Furthermore, the additional controlled dispersion element introduces additional undesirable optical losses.

There is known a method and device for amplifying chirped pulses, in which light pulses of a limited spectrum are stretched by means of a pulse stretcher comprising a first Bragg grating and a second Bragg grating acting as a pulse compressor, and which is used to compress the stretched and amplified pulses. The known device and method includes a pulse shaping assembly configured to measure the spectral phase of the compressed pulse and to correct the deviation of the measured spectral phase. The phase correction is performed by heating and/or stressing corresponding segments of the chirped Bragg grating, depending on the measured correction signal. Bragg gratings can be fiber optic or volume, they can be mounted on a comb-type component with individual temperature control of each segment using Peltier elements or resistive heating elements, or a continuous plate with low thermal conductivity can be placed between the Bragg grating and the segments of the comb-type component to provide a more uniform temperature distribution. The known method and device is described in the United States patent US11444425 (B2), 2022.

The disadvantage of the known method and device is that the pulse stretcher and the compressor are not inversely identical in dispersion, which makes it necessary to correct not only the dispersion of the amplifiers and other optical elements, but also the dispersion mismatch between the pulse stretcher and the compressor. In addition, sophisticated equipment is used to measure the spectral phase of the compressed pulse and for spectral phase deviation correction. In addition, the temperature tuning of the volume Bragg gratings is carried out by heating only one side of the volume Bragg gratings, which creates not only a longitudinal temperature gradient in the volume Bragg gratings, but also a detrimental transverse temperature gradient that can lead to a change in the dispersion across the aperture of the volume Bragg grating, which may lead to degradation of the quality of the compressed pulses.

### Technical problem to be solved

The invention aims to simplify the method and the device for amplifying ultra-short pulses, to make the device more compact and reliable, to match the dispersions of the pulse stretcher and the compressor more precisely, to simplify the method for compensating the amplifier dispersion and the initial pulse chirp, to introduce into the device the ability to control the dispersion of the pulse stretcher and/or the pulse compressor and to control the duration of the compressed pulses, the invention also aims to optimize the applicability of the device for a multi-photon microscope.

### Disclosure of the essence of the invention

According to the present invention, there is provided a proposed method for amplifying ultra-short pulses comprising temporal stretching the ultra-short pulses by a pulse stretcher, amplifying the temporally stretched pulses by an amplifier, and compressing the temporally stretched amplified pulses by a pulse compressor, wherein the stretching and the compressing of the said ultra-short impulses are performed in corresponding chirped volume Bragg gratings(CVBGs), which are of identical dispersion and orientated in opposite directions with respect to each other, and obtained by adjacent cutting of the same chirped volume Bragg grating.

The dispersion of at least one of the CVBGs (8) is temperature-controlled by creating a temperature gradient along the CVBG (8).

In a second aspect there is provided a device for amplifying ultra-short pulses, comprising a pulse stretcher for temporally stretching of the ultra-short pulses, an amplifier for amplifying of the stretched pulses, and a pulse compressor for compressing of the temporally stretched amplified pulses into compressed pulses, wherein the pulse stretcher and the pulse compressor respectively comprise chirped volume Bragg gratings (CVBGs), oriented in opposite directions with respect to each other, of identical dispersion, one of which is intended for temporal stretching of the ultra-short pulses and the other for the compression of the amplified pulses.

The CVBG (8) contained in the pulse stretcher and/or the pulse compressor is embedded in a heat-conducting tube, the inner cavity of which is matched in shape and dimensions to the outer surface of the CVBG, intended to control the dispersion of the CVBG by temperature, by creating a temperature gradient along the heat-conducting tube and the CVBG, and forming a temperature-controlled dispersion pulse stretcher or pulse compressor.

In a third aspect there is provided a temperature-controlled dispersion pulse stretcher or pulse compressor comprising a chirped volume Bragg grating (CVBG), wherein the temperature and, consequently, the dispersion are controlled by Peltier elements or resistive heating elements, wherein the cross-section of the CVBG is polygonal in shape and it is embedded in a heat-conducting tube, the inner cavity of which is matched in shape and dimensions to the shape and dimensions of the outer surface of the CVBG, and wherein the heat-conducting tube is made from plates, the number of which corresponds to the number of sides of said polygon, and wherein said plates are interconnected in such a way that a side or edge of each of the adjacent plates is supported by a plane of the inner surface of another adjacent plate, where the heat-conducting tube configured in this way is surrounded by a preselected number of heat-conducting fittings, each of which is individually connected to corresponding Peltier elements or resistive heating elements.

The walls of the heat-conducting tube are of different thicknesses at predetermined locations, wherein the differences in said wall thickness are selected according to the desired additional control of the variation of the temperature gradient along the CVBG.

An air gap of 5 to 50 micrometers is left between the inner surface of the heat-conducting tube and the outer surface of the chirped volume Bragg grating.

The heat-conducting tube is made of AISI 304 steel.

A collimator with an optical fiber is connected to the pulse stretcher or pulse compressor.

### Advantages of the invention

The advantage of the proposed invention is that the pulse stretcher and the pulse compressor use CVBG with identical dispersion, which are adjacently cut in pairs from one and the same bulky CVBG, in the pulse stretcher the CVBG is oriented such that its period decreases with depth, and in the pulse compressor the CVBG is oriented in the opposite direction and its period increases with depth. To compensate the dispersion of the amplifier and, if necessary, to compensate the chirp of the ultra-short input pulses generated by the seed laser, as well as to tune the duration of the compressed pulse, the dispersion of at least one of the CVBGs is temperature-controlled by creating a temperature gradient along the CVBG. In the pulse stretcher and/or pulse compressor, the CVBG is embedded in a heat-conducting tube of matched shape and dimensions, the thermal conductivity of which is many times higher than the thermal conductivity of the CVBG, whereby there is an air gap of a few to ten micrometers between the inner wall of the heat-conducting tube and the surface of the CVBG, this protects the CVBG from mechanical stress and at the same time ensures excellent thermal contact between the CVBG and the heat-conducting tube, resulting in a uniform longitudinal temperature gradient and, consequently, an uniform dispersion over the entire opening of the CVBG. A heat-conducting tube for mounting a quadrangular opening CVBG consists of four rectangular or otherwise shaped plates with at least one straight edge, the plates being arranged around the CVBG, each successive plate resting on an edge in the plane of the preceding plate and thus forming a quadrangular heat-conducting tube with matched dimensions, a strip of aluminum foil, for example 10 micrometers thick, can also be placed between the CVBG and the plate, which is removed after the heat-conducting tube has been manufactured, so that an air gap of the same thickness is created between the inner wall of the heat-conducting tube and the CVBG surface. The finished heat- conducting tube with matched dimensions is fixed by laser welding or TIG (Tungsten Inert Gas) welding or soldering.

In addition, the CVBG is placed in a stable position in a heat-conducting tube with matched shape and dimensions, the CVBG can neither move nor rotate, but it is also not mechanically stressed.

In addition, the proposed design protects the CVBG mounted in the heat-conducting tube from external environmental influences.

Another advantage of the proposed heat-conducting tube design is that a fiber collimator can be easily integrated into the heat-conducting tube to create a fiber optic pulse stretcher or pulse compressor.

The invention is explained in more detail by drawings which do not limit the scope of the invention and which show:
Fig. 1 shows an optical schematic of an ultra-short pulse amplifier device in which the pulse stretcher and the pulse compressor consist of identical CVBG adjacently cut in pairs from the same bulky CVBG.
Fig. 2a shows an axonometric projection of a temperature-controlled pulse stretcher with an optical fiber consisting of a quadrangular heat-conducting tube of matched dimensions in which a CVBG is placed.
Fig. 2b shows a temperature-controlled dispersion pulse stretcher with an optical fiber consisting of a quadrangular heat-conducting tube of matched dimensions, in which a CVBG is placed, a side view of the section is presented, additionally the temperature controller is shown.
Fig. 3 shows a temperature-controlled dispersion pulse compressor consisting of a quadrangular heat-conducting tube of matched dimensions, in which a CVBG is placed, a side view of the section is presented; additionally the temperature controller is shown.
Fig. 4 shows the method of arranging the plates forming a quadrangular heat-conducting tube of matched dimensions around the CVBG, view from the rear or front.
Fig. 5 shows the method of arranging the four plates to form a quadrangular heat-conducting tube of matched dimensions, an axonometric projection is provided.
Fig. 6 shows the arrangement of the plates forming a triangular heat-conducting tube of matched dimensions, rear or front view.
Fig. 7 - shows the temperature distribution in the heat-conducting tube and the CVBG, side view of the section.

The proposed ultra-short pulse amplification device consists essentially of three main parts, namely a pulse stretcher, which temporally stretches the ultra-short input pulses, an amplifier, which amplifies the stretched pulses, and a pulse compressor, which compresses the stretched and amplified pulses. The pulse stretcher and the compressor consist of two CVBG of identical dispersion, oriented in opposite directions with respect to each other, and which are adjacently cut from the same bulky CVBG. CVBG operate in a reflection configuration. The dispersion of at least one CVBG is controlled by a temperature gradient along the CVBG.

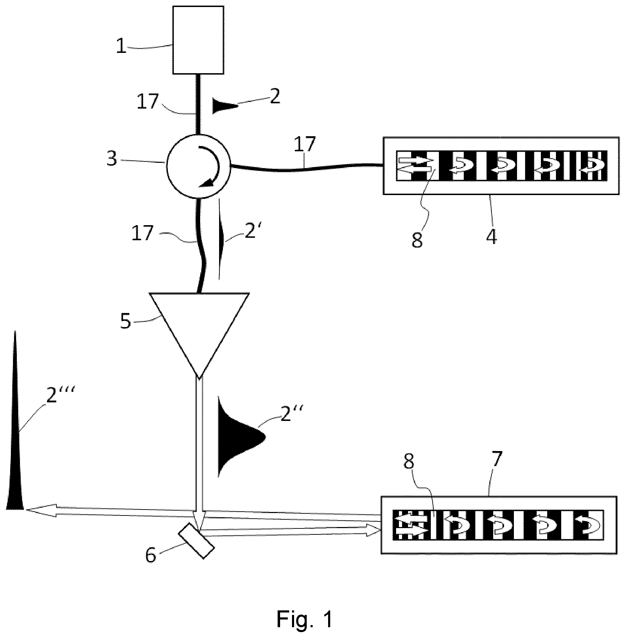

Fig. 1 shows an optical schematic of a chirped-pulse amplifier device in which the ultra-short input pulses 2 generated by laser 1 are directed through the fiber circulator 3 to the fiber pulse stretcher 4, where the ultra-short input pulses 2 are temporally stretched and returned back to the fiber circulator 3, the stretched pulses 2' in the circular 3 are directed to the amplifier 5, where the stretched pulses 2' are amplified and directed by mirror 6 to the pulse compressor 7, where the stretched and amplified pulses 2" are compressed, and the returned compressed pulses 2‴ are deflected at a small angle to separate them from the stretched and amplified pulses 2" and direct them into free space. Other well-known means, such as a free-space circulator or a polarization beam splitter in combination with a quarter-wave plate, can also be used to separate the compressed pulses 2‴ from the stretched amplified pulses 2". The pulse stretcher 4 and the pulse compressor 7 consist of CVBG 8 with identical dispersions, which are cut adjacently from one and the same bulky CVBG, and arranged in the amplifying device so that they are oriented in opposite directions i.e. in the pulse stretcher 4 the CVBG 8 is oriented in such a way that the period of the grating located at its front input/output end, which receives the ultra-short input pulses 2, is the largest and when going deeper, i.e. farther in the direction of pulse propagation towards the opposite end, the grating period decreases, and in the pulse compressor 7 the CVBG 8 is oriented in the opposite direction, i.e. its period increases as it goes deeper, i.e. farther in the direction of pulse propagation towards the opposite end, so the dispersions of the pulse stretcher 4 and the pulse compressor 7 are inversely identical.

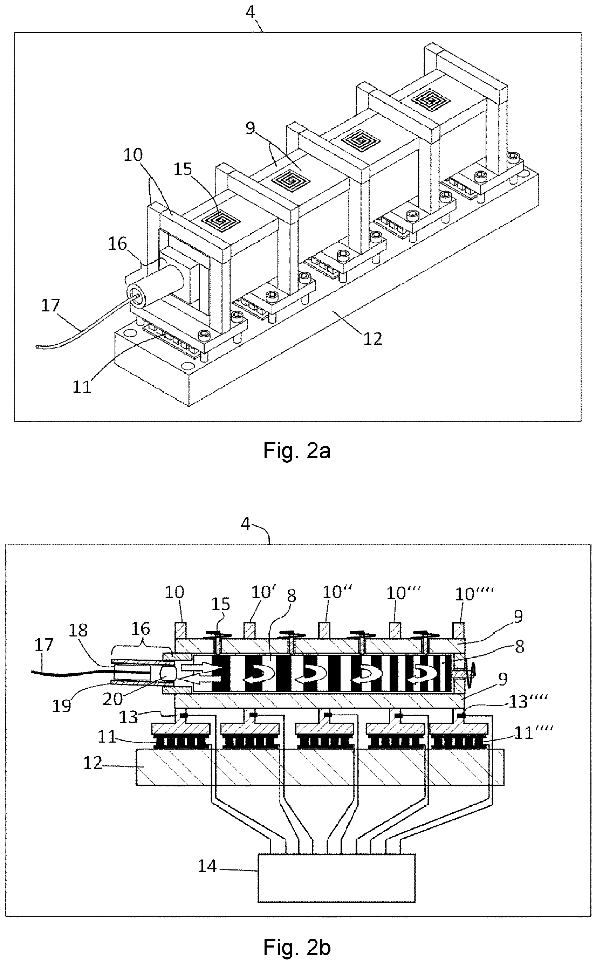

Fig. 2a and Fig. 2b show a temperature-controlled dispersion pulse stretcher 4 with a fiber input/output based on a CTBG 8 which is embedded in a quadrangular heat-conducting tube 9, the inner cavity of which is matched to the outer shape and dimensions of CVBG 8. The heat-conducting tube 9 is surrounded by heat-conducting fittings 10, 10', ...10ʺʺ at preselected positions, each of which is individually connected to the respective individual Peltier element 11, 11', ...11 "". On opposite sides, the Peltier elements are mounted on a common heat-conducting base 12, and each heat-conducting fitting 10, 10', ..., 10ʺʺ is equipped with a temperature sensor 13, 13', ...13ʺʺ, which are connected to a temperature controller 14 that provides power to the Peltier elements 11, 11', ...11"". For additional soft clamping of the CVBG 8 in the heat-conducting tube 9, spring pins 15 are used, at least two heat-conducting fittings are required to create the temperature gradient, in this particular case five heat-conducting fittings 10, ..., 10ʺʺ are shown. A collimator 16 with an optical fiber 17 is connected to a heat-conducting tube 9 at the front input/output end of the CVBG 8 in the pulse stretcher 4. The collimator 16 comprises a glass capillary 18 for the mounting of the optical fiber 17, a collimator housing 19 and a lens 20. It should be understood that, depending on the configuration of the ultra-short pulse amplifying device, the temperature-controlled dispersion pulse stretcher 4 may also have no fiber input/output.

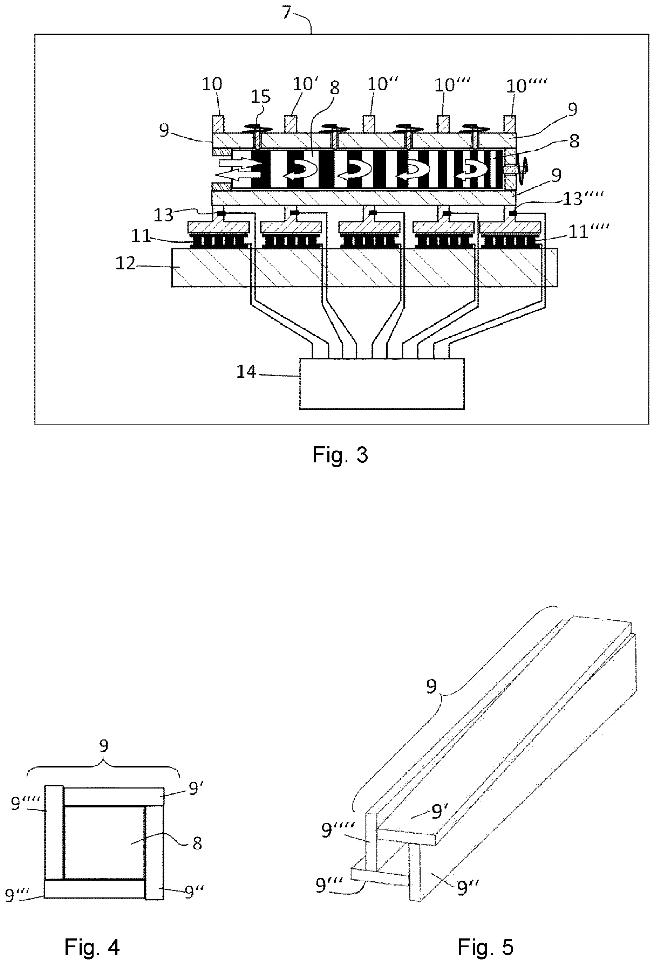

Fig. 3 shows a temperature-controlled dispersion pulse compressor 7, which is similar in construction to the temperature-controlled dispersion pulse stretcher 4 shown in Fig. 2a and Fig. 2b, the main difference being that the pulse compressor 7 does not have an attached collimator 16 with an optical fiber 17, and in addition, the CVBGs 8 of the pulse stretcher 4 and the pulse compressor 7 are oriented in opposing directions. Of course, the temperature-controlled dispersion pulse compressor 7 may also be equipped with a fiber input/output, for example, if the peak power of the compressed pulse is not high enough to optically damage the optical fiber.

Fig. 4 shows a quadrangular heat- conducting tube 9 of matched dimensions and the arrangement of its constituent plates 9', 9‴, ..9ʺʺ around a quadrangular aperture CVBG 8, where the inner side of each plate 9', 9‴, ..9ʺʺ rests respectively on the plane of the preceding plate, i.e. the 9' side on the 9ʺʺ plane, the 9ʺʺ side on the 9"'plane, the 9‴ side on the 9" plane, and the 9" side on the 9' plane, thus forming an inner cavity of the heat-conducting tube 9 of a dimension and shape compatible with that of the CTG 8. Regardless of the dimensions of the plates 9', 9‴, ..9"", the assembled heat-conducting tube 9 is fixed by laser welding, TIG welding, soldering or gluing.

Fig. 5 shows a method of arranging four plates 9', 9", ..9ʺʺ to form a quadrangular tapered/widened heat-conducting tube 9 of matched dimensions, where the side of each successive plate rests on the plane of the preceding plate.

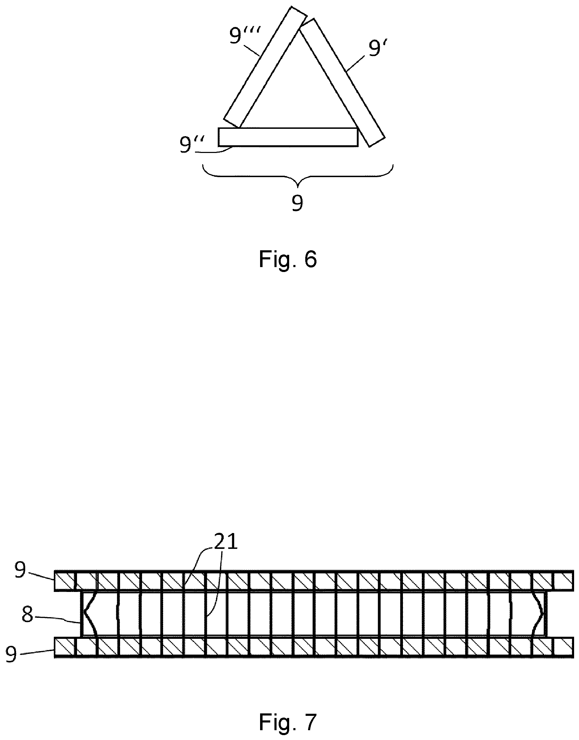

Fig. 6 shows a method of forming a triangular heat-conducting tube 9 of matched dimensions, where the edge of each successive plate 9', 9", 9‴ rests on the plane of the preceding plate 9‴, 9', 9". A polygonal heat-conducting tube 9 of any shape with matched dimensions is formed in a similar way.

Fig. 7 shows the temperature distribution in the stainless steel heat-conducting tube 9 and CVBG 8, the uniform temperature lines 21 are shown, each adjacent uniform temperature line 21 has a temperature change of one degree, the uniform temperature lines 21 pass across the heat-conducting tube 9 and CVBG 8, this means that the temperature gradient occurs only along CVBG 8 and the transverse temperature gradient is zero, except at the ends of CVBG 8 where a transverse temperature gradient is created in addition to the longitudinal temperature gradient.

The thermal conductivity of the heat-conducting tube 9 is higher than the thermal conductivity of CVBG 8 and the thermal conductivity of the material from which the heat-conducting tube 9 is made is higher than the thermal conductivity of the material from which CVBG 8 is made.

Similarly, the temperature gradient along the CVBG 8 can be tuned by varying the thickness of the wall of the heat-conducting tube 9 at predetermined locations, the temperature changes more rapidly where the walls of the heat-conducting tube 9 are thinner and the temperature changes more slowly at locations where the walls of the heat-conducting tube 9 are thicker.

The heat-conducting tubes 9 are manufactured from AISI 304 stainless steel and laser spot welding is used to fix the heat-conducting tubes 9.

The heat-conducting tubes 9 are manufactured from brass and soldering is used to fix the heat-conducting tubes 9.

The heat-conducting fittings (10, 10', 10", ...10ⁿ⁾ surrounding the heat-conducting tube 9 are made from rectangular copper rods in the same way as the heat-conducting tube 9 of matched dimensions, by stacking them one after the other with their enfaces into planes, and the rectangular copper rods are fixed by soldering or TIG welding.

## Claims

1. A method for amplifying ultra-short pulses comprising temporal stretching the ultra-short pulses (2) by a pulse stretcher (4), amplifying the temporally stretched pulses by an amplifier (5), and compressing the temporally stretched amplified pulses by a pulse compressor (7), **characterized in that** the stretching and the compressing of the said ultra-short impulses are performed in corresponding chirped volume Bragg gratings(CVBGs), which are of identical dispersion and orientated in opposite directions with respect to each other, and obtained by adjacent cutting of the same chirped volume Bragg grating.

2. A method for amplifying ultra-short pulses according to claim 1, **characterized in that** the dispersion of at least one of the CVBGs (8) is temperature-controlled by creating a temperature gradient along the CVBG (8).

3. A device for amplifying ultra-short pulses, comprising a pulse stretcher (4) for temporally stretching of the ultra-short pulses (2), an amplifier (5) for amplifying of the stretched pulses (2"), and a pulse compressor (7) for compressing of the temporally stretched amplified pulses (2‴) into compressed pulses (2‴), **characterized in that** the pulse stretcher (4) and the pulse compressor (7) respectively comprise chirped volume Bragg gratings (CVBGs) (8), oriented in opposite directions with respect to each other, of identical dispersion, one of which is intended for temporal stretching of the ultra-short pulses (2) and the other for the compression of the amplified pulses (2‴).

4. A device for amplifying ultra-short pulses according to claim 3, **characterized in that** the CVBG (8) contained in the pulse stretcher (4) and/or the pulse compressor (7) is embedded in a heat-conducting tube (9), the inner cavity of which is matched in shape and dimensions to the outer surface of the CVBG (8), intended to control the dispersion of the CVBG (8) by temperature, by creating a temperature gradient along the heat-conducting tube (9) and the CVBG (8), and forming a temperature-controlled dispersion pulse stretcher or pulse compressor.

5. A temperature-controlled dispersion pulse stretcher or pulse compressor comprising a chirped volume Bragg grating (CVBG) (8), wherein the temperature and, consequently, the dispersion are controlled by Peltier elements (11, 11', 11", ... 11ⁿ) or resistive heating elements, **wherein** the cross-section of the CVBG (8) is polygonal in shape and it is embedded in a heat-conducting tube (9), the inner cavity of which is matched in shape and dimensions to the shape and dimensions of the outer surface of the CVBG (8), and wherein the heat-conducting tube (9) is made from plates, the number of which corresponds to the number of sides of said polygon, and wherein said plates are interconnected in such a way that a side or edge of each of the adjacent plates is supported by a plane of the inner surface of another adjacent plate, where the heat-conducting tube configured in this way is surrounded by a preselected number of heat-conducting fittings (10, 10', 10", . .10ⁿ), each of which is individually connected to corresponding Peltier elements (11, 11', 11‴, ...11ⁿ) or resistive heating elements.

6. A temperature-controlled dispersion pulse stretcher or pulse compressor according to claim 5, **characterized in that** the walls of the heat-conducting tube (9) are of different thicknesses at predetermined locations, wherein the differences in said wall thickness are selected according to the desired additional control of the variation of the temperature gradient along the CVBG (8).

7. A temperature-controlled dispersion pulse stretcher or pulse compressor according to any one of claims 5 to 6, **characterized in that** an air gap of 5 to 50 micrometers is left between the inner surface of the heat-conducting tube (9) and the outer surface of the chirped volume Bragg grating (8).

8. A temperature-controlled dispersion pulse stretcher or pulse compressor according to any one of claims 5 to 7, **characterized in that** the heat-conducting tube (9) is made of AISI 304 steel.

9. A temperature-controlled dispersion pulse stretcher or pulse compressor according to any one of claims 5 to 8, **characterized in that** a collimator (16) with an optical fiber (17) is connected to the pulse stretcher (4) or pulse compressor.
